# EUROPÄISCHE PATENTANMELDUNG

(11) **EP 1 757 180 A1**
(43) Veröffentlichungstag der Anmeldung: **28.02.2007**
(21) Anmeldenummer: 06016056.1
(22) Anmeldetag: 02.08.2006
(51) Int. Cl.: A01B 35/24

(54) **Bodenbearbeitungszinken**

(30) Priorität: 25.08.2005 DE 102005040175
(71) Anmelder: Amazonen-Werke H. Dreyer GmbH & Co. KG, 49205 Hasbergen (DE)
(72) Erfinder: Sosnicki, Jürgen, 04205 Leipzig (DE); Reinke, Wilfried, 26123 Oldenburg (DE); Tiessen, Reimer Uwe, 26135 Oldenburg (DE)

(57) **Zusammenfassung**

Bodenbearbeitungszinken mit einem ersten waagerecht ausgerichteten Befestigungsteil zur Befestigung des Zinkens an einem Rahmen, einem zweiten Befestigungsteil zum Befestigen eines Bodenbearbeitungselementes und zumindest einer Federwindung zwischen den beiden Befestigungsteilen. Um mit einfachen Maßnahmen, einen größeren Freiraum zwischen der Unterseite des Rahmens und der Bodenoberfläche zu erreichen, ist vorgesehen, dass der erste Befestigungsteil sich im oberen Bereich der Federwindung befindet.

## Beschreibung

Die Erfindung betrifft einen Bodenbearbeitungszinken gemäß des Oberbegriffes des Patentanspruches 1.

Ein derartiger Bodenbearbeitungszinken ist durch die DE 101 54 475 A1 bekannt. Dieser Bodenbearbeitungszinken ist mit seinen ersten Befestigungsteil am Rahmen eines Bodenbearbeitungsgerätes, beispielsweise eines Grubbers mittels Befestigungselementen festgeklemmt. An seiner zweiten Befestigungsstelle weist er einen Befestigungsteil zur Aufnahme eines Bodenbearbeitungswerkzeuges auf. Zwischen den beiden Befestigungsteilen ist zumindest eine Federwindung angeordnet, um eine Federung und eine Ausweichmöglichkeit des Bodenbearbeitungselementes beim Auftreffen in den Boden sich befindlichen Hindernissen zu ermöglichen. Das erste Befestigungsteil zum befestigen des Zinkens am Rahmen ist waagerecht ausgerichtet und befindet sich im unteren Bereich der Federwindung. Hierdurch befindet sich die Federwindung innerhalb des Rahmens und der Rahmen befindet sich, wenn der Bereich zwischen den beiden Befestigungsteilen nicht übermäßig lang ausgebildet ist, relativ dicht oberhalb der Bodenoberflächen. Somit ergibt sich nur ein geringer Freiraum zwischen der Bodenoberfläche und der Unterseite des Rahmens. Insbesondere beim Einsatz von Grubbern, die mit derartigen Bodenbearbeitungszinken bestückt sind, kommt es auf mit Pflanzenresten besetzte Bodenoberfläche häufig aufgrund des geringen Freiraums zwischen der Bodenoberfläche und der Unterseite des Rahmens zu Verstopfungen.

Der Erfindung liegt die Aufgabe zugrunde, mit einfachen Maßnahmen, einen größeren Freiraum zwischen der Unterseite des Rahmens und der Bodenoberfläche zu erreichen.

Diese Aufgabe wird erfindungsgemäß durch das kennzeichnende Merkmal des Patentanspruches 1 gelöst. Durch diese Maßnahme wird die Grundvoraussetzung dafür geschaffen, dass ohne eine zusätzliche Verlängerung des Zinkenschaftes zwischen der Federwindung und dem zweiten Befestigungsteil zum befestigen eines Bodenbearbeitungselementes eine Größe Länge zwischen oberen Befestigungsteil des Zinkens und der Bodenoberflächen sich ergibt. Durch das Verlegen des Befestigungsteils zum Befestigen des Zinkens am Rahmen in den oberen Bereich der Federwindung wird die Höhe der Federwindung dazu genutzt, den Freiraum zwischen der Unterseite des Rahmens und der Bodenoberfläche um dieses Maß zu vergrößern. Weiterhin besteht der Vorteil, dass durch diese Maßnahmen die Federwindung nicht mehr in den Rahmen hineinragt, sondern das Befestigungsteil zum Befestigen des Zinkens am Rahmen den obersten Bereich des Bodenbearbeitungszinkens bildet, so dass der Zinken in seiner Gesamtheit unterhalb des Rahmens angeordnet ist. Dies ermöglicht eine größere Freiheit der Anordnung der Bodenbearbeitungszinken an dem Rahmen eines Bodenbearbeitungsgerätes.

In vorteilhafter Weise erstreckt der erste Befestigungsteil sich von der Federwindung aus entgegen der Bewegungsrichtung des Zinkens.

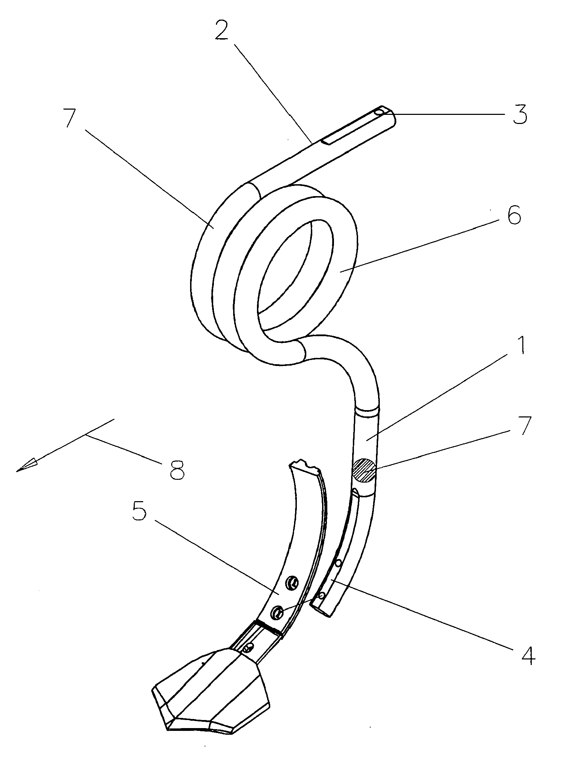

Weitere Einzelheiten der Erfindung sind der Beispielsbeschreibung und der Zeichnung zu entnehmen. Die Zeichnung zeigt
eine erfindungsgemäßen Bodenbearbeitungszinken in perspektivischer Darstellung.

Der Bodenbearbeitungszinken 1 weist ein erstes Befestigungsteil 2 zur Befestigung des Zinkens an einem Rahmen, beispielsweise an einem Grubberrahmen auf. Dieses Befestigungsteil 2 ist zur Befestigung des Zinkens an dem Rahmen zumindest in dem Bereich 3, an dem das Befestigungsteil 2 an dem Rahmen zur Anlage kommt, abgeflacht ausgebildet. Der Bodenbearbeitungszinken 1 weist ein zweites Befestigungsteil 4 an seinem unteren Ende zum Befestigen eines Bodenbearbeitungselementes 5 auf.

Zwischen den beiden Befestigungsteilen 2 und 4 sind zumindest eine Federwindung 6, im Ausführungsbeispiel etwas mehr als zwei Federwindungen 6 angeordnet. Das erste Befestigungsteil 2 zum Befestigen des Bodenbearbeitungszinkens am Rahmen befindet sich im oberen Bereich 7 der Federwindungen 6 und ist waagerecht ausgerichtet. Der erste Befestigungsteil 2 erstreckt sich von der Federwindung 6 aus entgegen der Bewegungsrichtung 8 des Zinkens 1. Durch die Anordnung des Befestigungsteil 2 im oberen Bereich der Federwindung 6 und der waagerechten Ausrichtung des Befestigungsteils 2 lässt sich der Bodenbearbeitungszinken 1 unterhalb der Ebene des Rahmens eines Bodenbearbeitungsgerätes, beispielsweise eines Grubbers anordnen, so dass sich sämtliche Teile des Bodenbearbeitungszinkens 1 unterhalb des Rahmens befinden.

## Patentansprüche

1. Bodenbearbeitungszinken mit einem ersten waagerecht ausgerichteten Befestigungsteil zur Befestigung des Zinkens an einem Rahmen, einem zweiten Befestigungsteil zum Befestigen eines Bodenbearbeitungselementes und zumindest einer Federwindung zwischen den beiden Befestigungsteilen, **dadurch gekennzeichnet, dass** der erste Befestigungsteil (2) sich im oberen Bereich (7) der Federwindung (6) befindet.

2. Bodenbearbeitungszinken nach Anspruch 1, **dadurch gekennzeichnet, dass** der erste Befestigungsteil (2) sich von der Federwindung (6) aus entgegen der Bewegungsrichtung (8) des Zinkens (1) erstreckt.
